# EUROPEAN PATENT SPECIFICATION

(11) **EP 3 778 707 B1**
(45) Date of publication and mention of the grant of the patent: **17.06.2026**
(21) Application number: 19777033.2
(22) Date of filing: 27.03.2019
(51) Int. Cl.: C08G 65/336, C08L 101/10, C09J 183/04, C09K 3/10

(54) **REACTIVE SILICON GROUP-CONTAINING POLYMER AND CURABLE COMPOSITION**
REAKTIVES SILICIUMGRUPPENHALTIGES POLYMER UND HÄRTBARE ZUSAMMENSETZUNG
POLYMÈRE CONTENANT DES GROUPES SILICIUM RÉACTIFS ET COMPOSITION DURCISSABLE

(30) Priority: 30.03.2018 JP 2018070426
(43) Date of publication of application: 17.02.2021
(73) Proprietor: KANEKA CORPORATION, Osaka 530-8288 (JP)
(72) Inventor: HARUMASHI, Tatsuro, Takasago-shi, Hyogo 676-8688 (JP); KUBOTA Nodoka, Takasago-shi, Hyogo 676-8688 (JP)
(74) Representative: Vossius & Partner Patentanwälte Rechtsanwälte mbB
(86) International application number: PCT/JP2019/013406
(87) International publication number: WO 2019/189492

(56) References cited:
- WO-A1-2008/018389
- WO-A2-02/053625
- CN-A- 101 798 382
- JP-A- 2004 506 076
- JP-A- 2004 525 205
- JP-A- 2015 134 940
- JP-A- 2016 098 302

## Description

### TECHNICAL FIELD

The present invention relates to a reactive silicon group-containing polymer which has a plurality of reactive silicon groups at an end; a curable composition including the reactive silicon group-containing polymer; a cured product of the curable composition; and a sealing material or an adhesive, consisting of the curable composition.

### BACKGROUND ART

Reactive silicon group-containing polymers have been known as moisture reactive polymers. The reactive silicon group-containing polymers have been included in many industrial products such as adhesives, sealing materials, coating materials, paints, pressure sensitive adhesives, and the like, and utilized in a wide range of fields (Patent Document 1).

Polymers having a main chain backbone consisting of various polymers such as a polyoxyalkylene-based polymer, a saturated hydrocarbon-based polymer, and a (meth)acrylic acid ester-based copolymer have been known as such reactive silicon group-containing polymers. Among them, a reactive silicon group-containing polymer having the polyoxyalkylene-based polymer as the main chain backbone has been widely applied since it is characterized in that the polymer is easily handleable due to its relatively low viscosity at room temperature and a cured product resulting from a reaction of the polymer also exhibits satisfactory elasticity, etc.

Physical properties of the cured product obtained using the reactive silicon group-containing polymer are affected by the structure of the polymer and a position and the number of the reactive group. In particular, regarding elasticity and strength of the cured product, factors such as cross-linking density and a molecular weight between crosslinks have a great influence on the physical properties. An appropriate molecular weight between crosslinks is needed in order to impart the elasticity to the cured product. Furthermore, the cured product with higher cross-linking density tends to have higher strength. The molecular weight between crosslinks with some degree of uniformity is effective to obtain the cured product having excellent strength. Therefore, the reactive groups preferably exist at ends of a molecular chain. Meanwhile, the reactive group needs to efficiently exist at the ends in order to increase the cross-linking density.

For example, a reactive silicon group-containing polyoxyalkylene-based polymer, which is one of the reactive silicon group-containing polymers, is obtained by subjecting an epoxy compound to a ring-opening polymerization, introducing carbon-carbon unsaturated groups into terminal hydroxyl groups, and then subjecting the carbon-carbon unsaturated groups and a silane compound to a hydrosilylation reaction (Patent Document 2). The reactive silicon group-containing polyoxyalkylene-based polymer obtained by this method has the reactive silicon group in an average number of 1.0 or less per end.

Meanwhile, a method for synthesizing a polyoxyalkylene-based polymer having a plurality of reactive silicon groups per end has also been known (Patent Document 3). Although a cured product obtained using the polymer obtained by this synthesizing method has an advantage of exhibiting excellent strength due to its high cross-linking density, the cured product is problematic in that it tends to have a high modulus and low elongation, and flexibility thereof is easily reduced.

Patent Document 1: Japanese Unexamined Patent Application, Publication No. S60-006747
Patent Document 2: Japanese Unexamined Patent Application, Publication No. S52-73998
Patent Document 3: PCT International Publication No. WO2013/180203

### DISCLOSURE OF THE INVENTION

### Problems to be Solved by the Invention

An object of the present invention is to provide a reactive silicon group-containing polymer that provides a cured product having a low modulus, flexibility, and excellent tensile strength even though a plurality of reactive silicon groups are introduced into an end thereof; and a curable composition containing the polymer.

### Means for Solving the Problems

The present inventors conducted extensive studies to solve the above problems, and have completed the following invention. That is, the present invention relates to the following:
(1). A reactive silicon group-containing polymer having a structure represented by General Formula (1) and/or (2): 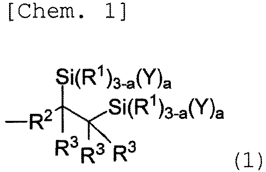 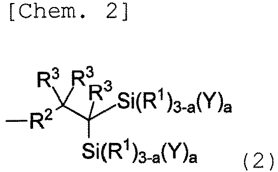 in which R² is a divalent linking group, each of two bonds that the R² has is bonded to a carbon atom, an oxygen atom, a nitrogen atom, or a sulfur atom in the linking group, R³ each independently is hydrogen, an alkyl group having 1 to 20 carbon atoms, an aryl group having 6 to 20 carbon atoms, an aralkyl group having 7 to 20 carbon atoms, or a silyl group,
   R¹ each independently is a hydrocarbon group having 1 to 20 carbon atoms, and the hydrocarbon group as R¹ may be substituted and may have a hetero-containing group,
   Y is a hydroxyl group, hydrogen, halogen, an alkoxy group, an acyloxy group, a ketoximate group, an amino group, an amide group, an acid amide group, an aminooxy group, a mercapto group, or an alkenyloxy group, and
   a is 1, 2, or 3.
(2). The reactive silicon group-containing polymer according to (1), in which R³ is hydrogen.
(3). The reactive silicon group-containing polymer according to (1) or (2), in which R² is -O-CH₂-.
(4). The reactive silicon group-containing polymer according to (1) to (3), in which a main chain backbone of the reactive silicon group-containing polymer is a polyoxyalkylene-based polymer.
(5). A curable composition comprising the reactive silicon group-containing polymer according to any one of (1) to (4).
(6). A curable composition comprising
   (A) a reactive silicon group-containing polymer having a structure represented by General Formula (1) and/or (2): 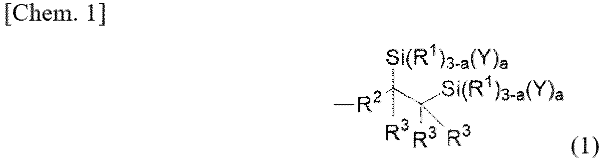 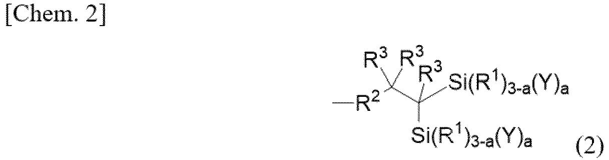 wherein
      R² is a divalent linking group, each of two bonds that the R² has is bonded to a carbon atom, an oxygen atom, a nitrogen atom, or a sulfur atom in the linking group,
      R³ each independently is hydrogen, an alkyl group having 1 to 20 carbon atoms, an aryl group having 6 to 20 carbon atoms, an aralkyl group having 7 to 20 carbon atoms, or a silyl group,
      R¹ each independently is a hydrocarbon group having 1 to 20 carbon atoms, and the hydrocarbon group as R¹ may be substituted and may have a hetero-containing group,
      Y is a hydroxyl group or a hydrolyzable group, and
      a is 1, 2, or 3; and
   (B) a curing catalyst.
(7). The curable composition according to (6), in which the curable composition includes, as the (B) curing catalyst, at least one selected from the group consisting of an organotin compound, a metal carboxylate, an amine compound, a carboxylic acid, and an alkoxy metal.
(8). A cured product of the curable composition according to any one of (5) to (7).
(9). A method for producing a cured product, including:
   applying, casting, or filling the curable composition according to any one of (5) to (7); and
   curing the curable composition which has been applied, cast, or filled.
(10). A sealing material or an adhesive, consisting of the curable composition according to any one of (5) to (7).

### Effects of the Invention

According to the present invention, a reactive silicon group-containing polymer that provides a cured product having a low modulus, flexibility, and excellent tensile strength even though a plurality of reactive silicon groups are introduced into an end thereof; and a curable composition containing the polymer can be provided.

### PREFERRED MODE FOR CARRYING OUT THE INVENTION

### <<Reactive silicon group-containing polymer>>

A reactive silicon group-containing polymer has an end structure represented by General Formula (1) and/or (2): 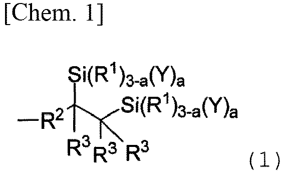 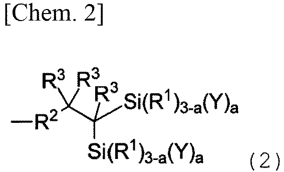 in which R² is a divalent linking group, each of two bonds that R² has is bonded to a carbon atom, an oxygen atom, a nitrogen atom, or a sulfur atom in the linking group, R³ each independently is hydrogen, an alkyl group having 1 to 20 carbon atoms, an aryl group having 6 to 20 carbon atoms, an aralkyl group having 7 to 20 carbon atoms, or a silyl group, R¹ each independently is a hydrocarbon group having 1 to 20 carbon atoms, and the hydrocarbon group as R¹ may be substituted and may have a hetero-containing group, Y is as defined in claim 1 or claim 6, respectively, and a is 1, 2, or 3.

Herein, the term "end" includes a chain end and an adjacent structure thereof in a polymer molecular chain. More specifically, the term may be defined as a group substituted on bonded atoms corresponding to 20% by number, more preferably 10% by number from the end among the bonded atoms constituting the polymer molecular chain. Furthermore, when expressed in terms of the number of the bonded atoms, the term "end site" may be defined as 60 atoms, more preferably 40 atoms from the end of the polymer molecular chain.

As described above, it is believed that the reactive silicon group-containing polymer in which two reactive silicon groups are bonded to a group having 2 or less atoms so as to be adjacent to each other at an end thereof results in a cured product which has excellent tensile strength, but has a low modulus, elongation that is not decreased, and flexibility.

R² is a divalent linking group. Each of two bonds that R² has is bonded to a carbon atom, an oxygen atom, a nitrogen atom, or a sulfur atom in the linking group. Here, the phrase "each of two bonds that R² has is bonded to a carbon atom, an oxygen atom, a nitrogen atom, or a sulfur atom in the linking group" means that each of two bonds that R² has exists on a carbon atom, an oxygen atom, a nitrogen atom, or a sulfur atom in the linking group. Specific examples of the divalent linking group include -(CH₂)ₙ-, -O-(CH₂)ₙ-, -S-(CH₂)ₙ-, -NR⁴-(CH₂)ₙ-, -O-C(=O)-NR⁴-(CH₂)ₙ-, and -NR⁴-C(=O)-NR⁴-(CH₂)ₙ-. Among them, -O-(CH₂)ₙ-, -O-C(=O)-NR⁴-(CH₂)ₙ-, and -NR⁴-C(=O)-NR⁴-(CH₂)ₙ- are preferred, and -O-CH₂- is more preferred from the viewpoint of availability of raw materials. R⁴ is a hydrogen atom or a hydrocarbon group having 1 to 10 carbon atoms. Examples of the hydrocarbon group as R⁴ include an alkyl group such as a methyl group, an ethyl group, an n-propyl group, and an isopropyl group; an aryl group such as a phenyl group and a naphthyl group; an aralkyl group such as a benzyl group. n is preferably an integer of 0 to 10, more preferably an integer of 0 to 5, further preferably an integer of 0 to 2, particularly preferably 0 or 1, and most preferably 1.

R³ each independently is hydrogen, an alkyl group having 1 to 20 carbon atoms, an aryl group having 6 to 20 carbon atoms, an aralkyl group having 7 to 20 carbon atoms, or a silyl group. The alkyl group has preferably 1 to 12 carbon atoms, more preferably 1 to 6 carbon atoms, and particularly preferably 1 to 4 carbon atoms. The aryl group has preferably 6 to 12 carbon atoms and more preferably 6 to 10 carbon atoms. The aralkyl group has preferably 7 to 12 carbon atoms. Specific examples of R³ include hydrogen; an alkyl group such as a methyl group, an ethyl group, and a cyclohexyl; an aryl group such as a phenyl group and a tolyl group; an aralkyl group such as a benzyl group and a phenethyl group; a silyl group such as a trimethylsilyl group. Among them, hydrogen, a methyl group, and a trimethylsilyl group are preferred, and hydrogen and a methyl group are more preferred, and, from the viewpoint of availability of raw materials, hydrogen is further preferred.

In General Formula (1), it is also preferred that one of two R³s bonded to the same carbon atom be an alkyl group having 1 to 20 carbon atoms, an aryl group having 6 to 20 carbon atoms, an aralkyl group having 7 to 20 carbon atoms, or a silyl group, and the other two R³s in General Formula (1) be hydrogen atoms. In General Formula (2), it is also preferred that R³ bonded to a carbon atom to which two reactive silicon atoms bind be an alkyl group having 1 to 20 carbon atoms, an aryl group having 6 to 20 carbon atoms, an aralkyl group having 7 to 20 carbon atoms, or a silyl group, and the other two R³s in General Formula (2) be hydrogen atoms.

### <Reactive silicon group>

The reactive silicon group included in the end structure represented by General Formula (1) or (2) above is a group represented by General Formula (3):

-Si(R¹)₃₋ₐ(Y)ₐ (3)

in which R¹ each independently is a hydrocarbon group having 1 to 20 carbon atoms, the hydrocarbon group as R¹ may be substituted and may have a hetero-containing group, Y is as defined in claim 1 or claim 6, respectively, and a is 1, 2, or 3. R¹ is a hydrocarbon group having 1 to 20 carbon atoms. The hydrocarbon group as R¹ has preferably 1 to 12 carbon atoms, more preferably 1 to 6 carbon atoms, and particularly preferably 1 to 4 carbon atoms.

The hetero-containing group that the hydrocarbon group as R¹ may have as a substituent is a group including a heteroatom. Here, the heteroatom refers to an atom other than a carbon atom and a hydrogen atom.

Suitable examples of the heteroatom include N, O, S, P, Si, and a halogen atom. Regarding the hetero-containing group, the total number of carbon atoms and hetero atoms is preferably 1 to 10, more preferably 1 to 6, and further preferably 1 to 4. Suitable examples of the hetero-containing group include a hydroxyl group; a mercapto group; a halogen atom such as Cl, Br, I, and F; a nitro group; a cyano group; an alkoxy group such as a methoxy group, an ethoxy group, an n-propyloxy group, and an isopropyloxy group; an alkylthio group such as a methylthio group, an ethylthio group, an n-propylthio group, and an isopropylthio group; an acyl group such as an acetyl group, a propionyl group, and a butanoyl group; an acyloxy group such as an acetyloxy group, a propionyloxy group, and a butanoyloxy group; a substituted or unsubstituted amino group such as an amino group, a methylamino group, an ethylamino group, a dimethylamino group, and a diethylamino group; a substituted or unsubstituted aminocarbonyl group such as an aminocarbonyl group, a methylaminocarbonyl group, an ethylaminocarbonyl group, a dimethylaminocarbonyl group, and a diethylaminocarbonyl group; a cyano group, and the like.

When R¹ is a hydrocarbon group substituted with a hetero-containing group, R¹ has the total number of carbon atoms and hetero atoms of preferably 2 to 30, more preferably 2 to 18, further preferably 2 to 10, and particularly preferably 2 to 6. Specific Examples of the hydrocarbon group having 1 to 20 carbon atoms as R¹ include an alkyl group such as a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, a 2-ethyl-n-hexyl group, an n-nonyl group, an n-decyl group, an n-undecyl group, an n-dodecyl group, an n-tridecyl group, an n-tetradecyl group, an n-pentadecyl group, an n-hexadecyl group, an n-octadecyl group, an n-nonadecyl group, and an n-icosyl group; an alkenyl group such as a vinyl group, a 2-propenyl group, a 3-butenyl group, and a 4-pentenyl group; a cycloalkyl group such as a cyclopropyl group, a cyclobutyl group, a cyclopentyl group, a cyclohexyl group, a cycloheptyl group, and a cyclooctyl group; an aryl group such as a phenyl group, a naphthalen-1-yl group, a naphthalen-2-yl group, a o-phenylphenyl group, a m-phenylphenyl group, and a p-phenylphenyl group; an aralkyl group such as benzyl group, a phenethyl group, a naphthalen-1-ylmethyl group, and a naphthalen-2-ylmethyl group. Groups in which these hydrocarbon groups are substituted with the above-described hetero-containing groups are also preferred as R¹.

Suitable examples of R¹ include a hydrogen atom; an alkyl group such as a methyl group and an ethyl group; an alkyl group having a hetero-containing group such as a chloromethyl group and a methoxymethyl group; a cycloalkyl group such as a cyclohexyl group; an aryl group such as a phenyl group; an aralkyl group such as a benzyl group, and the like. R¹ is preferably a hydrogen atom, a methyl group, and a methoxymethyl group, and more preferably a methyl group.

Y is as defined in claim 1 or claim 6, respectively.

Examples of Y include a hydroxyl group, hydrogen, halogen, an alkoxy group, an acyloxy group, a ketoximate group, an amino group, an amide group, an acid amide group, an aminooxy group, a mercapto group, and an alkenyloxy group. Among them, from the viewpoint of being mildly hydrolyzable and easily handleable, an alkoxy group such as a methoxy group and an ethoxy group is more preferred, and a methoxy group and an ethoxy group are particularly preferred.

a is 1, 2, or 3. a is preferably 2 or 3.

The reactive silicon group represented by General Formula (3) is preferably a group represented by General Formula (3-1) below:

-Si(R¹⁰)_{3-b}(OR¹¹)_{b} (3-1)

in which R¹⁰ each independently is an alkyl group having 1 to 6 carbon atoms, a haloalkyl group having 1 to 6 carbon atoms, an alkoxyalkyl group having 2 to 6 carbon atoms, or an N,N-dialkylaminoalkyl group represented by -R¹²N(R¹³)₂, R¹² is a methyl group or an ethyl group; R¹³ is a methyl group or an ethyl group, R¹¹ is an alkyl group having 1 to 6 carbon atoms, an alkenyl group having 2 to 6 carbon atoms, or an acyl group having 2 to 6 carbon atoms, and b is 2 or 3.

Therefore, the end structure represented by General Formula (1) and/or (2) is preferably an end structure represented by General Formula (1-1) and/or (2-1) below:

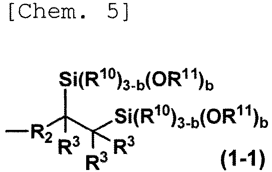

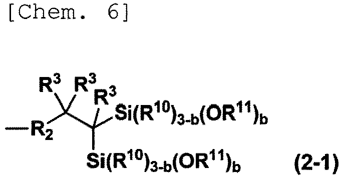

The end structure represented by General Formula (1) and/or (2) is more preferably an end structure represented by General Formula (1-2) and/or (2-2) below:

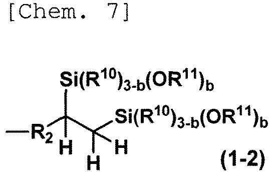

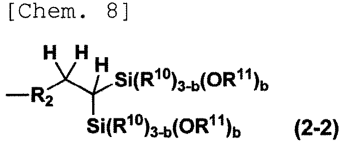

Specific examples of the reactive silicon group include, but are not limited to a trimethoxysilyl group, a triethoxysilyl group, a tris(2-propenyloxy)silyl group, a triacetoxysilyl group, a dimethoxymethylsilyl group, a diethoxymethylsilyl group, a dimethoxyethylsilyl group, a (chloromethyl)dimethoxysilyl group, a (chloromethyl)diethoxysilyl group, a (methoxymethyl)dimethoxysilyl group, a (methoxymethyl)diethoxysilyl group, an (N,N-diethylaminomethyl)dimethoxysilyl group, and an (N,N-diethylaminomethyl)diethoxysilyl group. Among them, a dimethoxymethylsilyl group, a trimethoxysilyl group, a triethoxysilyl group, and a (methoxymethyl)dimethoxysilyl group are preferred since a cured product having a satisfactory mechanical physical property is obtained. From the viewpoint of activity, a trimethoxysilyl group, a (chloromethyl)dimethoxysilyl group, and a (methoxymethyl)dimethoxysilyl group are more preferred, and trimethoxysilyl group and a (methoxymethyl)dimethoxysilyl group are particularly preferred. From the viewpoint of stability, a dimethoxymethylsilyl group, a diethoxymethylsilyl group, and a triethoxysilyl group are more preferred, and a dimethoxymethylsilyl group is particularly preferred.

The average number of the reactive silicons included per molecule is preferably 2 or more, more preferably 3 or more, and further preferably 4 or more. The upper limit thereof is preferably 8 or less, and more preferably 6 or less.

### <Main chain structure>

A main chain structure of the reactive silicon group-containing polymer may be linear or have a branched chain. The main chain backbone of the reactive silicon group-containing polymer is not particularly limited. Polymers having various main chain backbones can be used as the reactive silicon group-containing polymer. Examples of the main chain backbone of the reactive silicon group-containing polymer include an organic polymer, for example, a polyoxyalkylene-based polymer such as polyoxyethylene, polyoxypropylene, polyoxybutylene, polyoxytetramethylene, a polyoxyethylene-polyoxypropylene copolymer, and a polyoxypropylene-polyoxybutylene copolymer; a saturated hydrocarbon-based polymer such as an ethylenepropylene-based copolymer, a copolymer of polyisobutylene, isobutylene with isoprene, etc., a copolymer of polychloroprene, polyisoprene, isoprene or butadiene with acrylonitrile and/or styrene, etc., a copolymer of polybutadiene, isoprene or butadiene with acrylonitrile and styrene, etc., and a hydrogenated polyolefin-based polymer that is obtained by hydrogenating these polyolefin-based polymers; a polyester-based polymer; a (meth)acrylic acid ester-based polymer that is obtained by subjecting a (meth)acrylic acid ester-based monomer to radical polymerization such as ethyl(meth)acrylate, butyl(meth)acrylate, etc., and a vinyl-based polymer such as a polymer that is obtained by subjecting a monomer such as a (meth)acrylic acid-based monomer, vinyl acetate, acrylonitrile, and styrene to radical polymerization; a graft polymer that is obtained by polymerizing a vinyl monomer in the above-described polymer; a polyamide-based polymer; a polycarbonate-based polymer; a diallyl phthalate-based polymer. Each of the above-described polymers may be a polymer in which blocked regions and grafted regions are mixed. Among them, a saturated hydrocarbon-based polymer, a polyoxyalkylene-based polymer, and a (meth)acrylic acid ester-based polymer are preferred from the viewpoints of a relatively low glass transition temperature and excellent cold resistance of a cured product obtained therefrom, and a polyoxyalkylene-based polymer is more preferred.

The reactive silicon group-containing polymer may be a polymer having any one main chain backbone of the above-described various main chain backbones or a mixture of polymers having different main chain backbones. Furthermore, the mixture may be a mixture of polymers that are produced separately or a mixture of polymers that are produced simultaneously so as to give any mixed composition.

The reactive silicon group-containing polymer has preferably a number average molecular weight in terms of polystyrene as measured by GPC of 3,000 to 100,000, more preferably 3,000 to 50,000, and particularly preferably 3,000 to 30,000. When the number average molecular weight falls within the above-described range, the reactive silicon group is introduced in an appropriate amount. Therefore, a reactive silicon group-containing polymer having an easily handleable viscosity and excellent workability is easily obtained, while keeping production costs within an appropriate range.

A molecular weight of the reactive silicon group-containing polymer can also be expressed in an end group-based molecular weight which is determined by directly measuring an end group concentration of a polymer precursor prior to introduction of the reactive silicon group thereinto using a method for measuring a hydroxyl value according to JIS K 1557 and a titration analysis based on the principle of a method for measuring an iodine value as defined in JIS K 0070 in view of the structure of an organic polymer (the degree of branching defined by a polymerization initiator used). The end group-based molecular weight of the reactive silicon group-containing polymer may also be determined by creating a calibration curve between the number average molecular weight determined by a standard GPC measurement and the end group-based molecular weight of the polymer precursor, and converting the number average molecular weight determined by GPC of the reactive silicon group-containing polymer into the end group-based molecular weight.

A molecular weight distribution (Mw / Mn) of the reactive silicon group-containing polymer is not particularly limited. The molecular weight distribution is preferably narrow, preferably less than 2.0, more preferably 1.6 or less, further preferably 1.5 or less, particularly preferably 1.4 or less, and most preferably 1.3 or less. The molecular weight distribution of the reactive silicon group-containing polymer can be determined from a number average molecular weight and a weight average molecular weight obtained by GPC measurement.

### <Method for synthesizing reactive silicon group-containing polymer>

A method for synthesizing the reactive silicon group-containing polymer will now be described.

### (Polyoxyalkylene-based polymer)

When the polyoxyalkylene-based polymer is used as a main chain of the reactive silicon group-containing polymer, a hydroxyl group-terminated polyoxyalkylene-based polymer is obtained by a method in which a hydroxyl group-containing initiator is polymerized with an epoxy compound using a composite metal cyanide complex catalyst such as a zinc hexacyanocobaltate-glyme complex, and then (i) a method in which a carbon-carbon triple bond is introduced into a hydroxyl group in the resultant hydroxyl group-terminated polyoxyalkylene-based polymer and then two silane compounds are added to one carbon-carbon triple bond through a hydrosilylation reaction; (ii) a method in which the resultant hydroxyl group-terminated polyoxyalkylene-based polymer is reacted with a compound having a hydroxyl group-reactive group and two reactive silicon groups; and (iii) a method in which the hydroxyl group-terminated polyoxyalkylene-based polymer is reacted with an excess of a polyisocyanate compound to thereby form an isocyanate group-terminated polymer and then reacted with a compound having an isocyanate group-reactive group and two reactive silicon groups are preferably used, and the method (i) is more preferred from the viewpoint of simplicity and stable physical properties of the resultant reactive silicon group-containing polymer.

An example of the hydroxyl group-containing initiator includes a compound having one or more hydroxyl groups such as ethylene glycol, propylene glycol, glycerin, pentaerythritol, low-molecular weight polypropylene glycol, polyoxypropylene triol, allyl alcohol, polypropylene monoallylether, and polypropylene monoalkylether.

Examples of the epoxy compound include alkylene oxides such as ethylene oxide and propylene oxide; glycidyl ethers such as methyl glycidyl ether and allyl glycidyl ether, and the like. Among them, propylene oxide is preferred.

An example of a group having the carbon-carbon triple bond to be introduced into the hydroxyl group in the method (i) includes an alkynyl group. Furthermore, other unsaturated groups such as a vinyl group, an allyl group, a methallyl group, or the like may be introduced into a terminal hydroxyl group concomitantly with the alkynyl group.

As a method for introducing the carbon-carbon triple bond into the hydroxyl group in the method (i), a method in which a terminal hydroxyl group-containing polymer is treated with an alkali metal salt and then is reacted with a halogenated hydrocarbon compound having a carbon-carbon triple bond is preferably used. Examples of the alkali metal salt include sodium hydroxide, sodium alkoxide, potassium hydroxide, potassium alkoxide, lithium hydroxide, lithium alkoxide, cesium hydroxide, and cesium alkoxide. From the viewpoints of easiness of handling and solubility, sodium hydroxide, sodium methoxide, sodium ethoxide, potassium hydroxide, potassium methoxide, and potassium ethoxide are preferred, and sodium methoxide and potassium methoxide are more preferred. From the viewpoint of availability, sodium methoxide is particularly preferred. The alkali metal salt may be used in a dissolved state in a solvent.

Examples of the halogenated hydrocarbon compound having a carbon-carbon triple bond used in the method (i) include propargyl chloride, 1-chloro-2-butyne, 4-chloro-1-butyne, 1-chloro-2-octyne, 1-chloro-2-pentyne, 1,4-dichloro-2-butyne, 5-chloro-1-pentyne, 6-chloro-1-hexyne, propargyl bromide, 1-bromo-2-butyne, 4-bromo-1-butyne, 1-bromo-2-octyne, 1-bromo-2-pentyne, 1,4-dibromo-2-butyne, 5-bromo-1-pentyne, 6-bromo-1-hexyne, propargyl iodide, 1-iodo-2-butyne, 4-iodo-1-butyne, 1-iodo-2-octyne, 1-iodo-2-pentyne, 1,4-diiodo-2-butyne, 5-iodo-1-pentyne, and 6-iodo-1-hexyne. Among them, propargyl chloride, propargyl bromide, and propargyl iodide are more preferred. Furthermore, a halogenated hydrocarbon having an unsaturated bond other than the halogenated hydrocarbon having a carbon-carbon triple bond such as vinyl chloride, allyl chloride, methallyl chloride, vinyl bromide, allyl bromide, methallyl bromide, vinyl iodide, allyl iodide, and methallyl iodide may be used concomitantly with the halogenated hydrocarbon compound having a carbon-carbon triple bond.

Examples of a hydrosilane compound used in the method (i) include halogenated silanes such as trichlorosilane, dichloromethylsilane, chlorodimethylsilane, and dichlorophenylsilane; alkoxy silanes such as trimethoxysilane, triethoxysilane, dimethoxymethylsilane, diethoxymethylsilane, dimethoxyphenylsilane, ethyldimethoxysilane, methoxydimethylsilane, ethoxydimethylsilane, (chloromethyl)dimethoxysilane, (chloromethyl)diethoxysilane, (methoxymethyl)dimethoxysilane, (methoxymethyl)diethoxysilane, (N,N-diethylaminomethyl)dimethoxysilane, and (N,N-diethylaminomethyl)diethoxysilane; acyloxy silanes such as diacetoxymethylsilane and diacetoxyphenylsilane; ketoximate silanes such as bis(dimethylketoximate)methylsilane and bis(cyclohexylketoximate)methylsilane; isopropenyloxy silanes (de-acetone form) such as triisopropenyloxy silane.

### ((Meth)acrylic acid ester-based polymer)

When the (meth)acrylic acid ester-based polymer is used as a main chain of the reactive silicon group-containing polymer, methods described in the following (i) to (iv) may be used:
(i) a method in which a compound having a polymerizable unsaturated group and two reactive silicon groups is copolymerized with a monomer having (meth)acrylic structure;
(ii) a method in which a monomer having (meth)acrylic structure is copolymerized in the presence of a compound having two reactive silicon groups and a mercapto group, serving as a chain transfer agent;
(iii) a method in which a compound having a polymerizable unsaturated group and a reactive functional group (e.g., acrylic acid, 2-hydroxyethyl acrylate) is copolymerized with a monomer having (meth)acrylic structure, and then, reacted with a compound having two reactive silicon groups and a functional group which is reactive with a reactive functional group (e.g., isocyanatesilane compound);
(iv) a method in which a monomer having (meth)acrylic structure is polymerized through a living radical polymerization method such as an atom transfer radical polymerization, a carbon-carbon triple bond is introduced into an end of a molecular chain, and then converted into two reactive silicon groups.

The method (iv) is preferred from the viewpoints of having any molecular weight, a narrow molecular weight distribution, and a possibility of obtaining a low-viscosity polymer.

### (Saturated hydrocarbon-based polymer)

When the saturated hydrocarbon-based polymer is used as a main chain of the reactive silicon group-containing polymer, an example of a method for producing the reactive silicon group-containing polymer includes a method in which, as a main monomer, an olefin-based compound having 2 to 6 carbon atoms such as ethylene, propylene, 1-butene, and isobutylene is polymerized to thereby obtain a polymer, a carbon-carbon triple bond is introduced into an end of a molecular chain of the resultant polymer, and then two reactive silicon groups are introduced into the carbon-carbon triple bond.

### <<Curable composition>>

The present invention also provides a curable composition as defined in claim 5 or claim 6.

The reactive silicon group-containing polymer as described in claims 1 to 4 or claim 6 is mixed with various additives, as necessary, to thereby obtain a curable composition. Examples of additives include a silanol condensation catalyst, a filler, an adhesiveness imparting agent, a plasticizer, an anti-sagging agent, an antioxidant, a photostabilizer, an ultraviolet absorber, a physical property-adjusting agent, an epoxy group-containing compound, a photocurable material, an oxygen-curable material, and other resins than the reactive silicon group-containing polymer.

Furthermore, for the purpose of adjustment of physical properties of the curable composition or the cured product, the curable composition may be added with other additives than those described above, as necessary. Examples of such other additives include a tackifying resin, a solvent, a diluent, an epoxy resin, a surface modifier, a blowing agent, a curability adjusting agent, a flame retardant, silicate, a radical inhibitor, a metal deactivator, an antiozonant, a phosphorus-based peroxide decomposer, a lubricant, a pigment, and a fungicide.

### <Silanol condensation catalyst>

For the curable composition, the silanol condensation catalyst may be used for the purpose of facilitating a hydrolysis/condensation reaction of the reactive silicon group in the reactive silicon group-containing polymer and subjecting the polymer to chain extension or cross-linking.

Examples of the silanol condensation catalyst include an organotin compound, a metal carboxylate, an amine compound, a carboxylic acid, and an alkoxy metal.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), a reaction product of dibutyltin oxide and a silicate compound, a reaction product of dioctyltin oxide and a silicate compound, and a reaction product of dibutyltin oxide and phthalic acid ester.

Specific examples of the metal carboxylate include tin carboxylate, bismuth carboxylate, titanium carboxylate, zirconium carboxylate, and iron carboxylate. Furthermore, a salt formed by combining the below-described carboxylic acid and various metals may be used as the metal carboxylate.

Specific examples of the amine compound include amines such as octyl amine, 2-ethylhexyl amine, lauryl amine, and stearyl amine; a nitrogen-containing heterocyclic compound such as pyridine, 1,8-diazabicyclo[5,4,0]undecene-7 (DBU) and 1,5-diazabicyclo[4,3,0]nonene-5 (DBN); guanidines such as guanidine, phenylguanidine, and diphenylguanidine; biguanides such as butylbiguanide, 1-o-tolylbiguanide, and 1-phenylbiguanide; an amino group-containing silane coupling agent; a ketimine compound, and the like.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include titanium compounds such as tetrabutyl titanate, titanium tetrakis(acetylacetonate), and diisopropoxytitanium bis(ethylacetoacetate); aluminum compounds such as aluminum tris(acetylacetonate) and diisopropoxyaluminium ethyl acetoacetate; and zirconium compounds such as zirconium tetrakis(acetylacetonate).

As other silanol condensation catalysts, a fluorine anion-containing compound, a photoacid generator, and a photobase generator may be also used.

Two or more kinds of different catalysts may also be used in combination as the silanol condensation catalysts.

An amount of use of the silanol condensation catalyst is preferably 0.001 to 20 parts by weight, more preferably 0.01 to 15 parts by weight, and particularly preferably 0.01 to 10 parts by weight, with respect to 100 parts by weight of the reactive silicon group-containing polymer.

### <Filler>

Various fillers may be incorporated into the curing composition. Examples of the filler include heavy calcium carbonate, colloidal calcium carbonate, magnesium carbonate, diatomaceous earth, clay, talc, titanium oxide, fumed silica, precipitated silica, crystalline silica, molten silica, silicic anhydride, hydrated silicic acid, carbon black, ferric oxide, aluminum powder, zinc oxide, active zinc oxide, PVC powder, PMMA powder, glass fibers, and filaments.

An amount of use of the filler is preferably 1 to 300 parts by weight, and particularly preferably 10 to 250 parts by weight, with respect to 100 parts by weight of the reactive silicon group-containing polymer.

For the purpose of decreasing weight (density) of the cured product formed using the curing composition, a balloon (hollow filler) such as an organic balloon and an inorganic balloon may be added. The balloon is a spherical filler of which inside is hollow, and examples of a material of the balloon include an inorganic material such as glass, shirasu, and silica, and an organic material such as a phenolic resin, a urea resin, polystyrene, and saran.

An amount of use of the balloon is preferably 0.1 to 100 parts by weight, and particularly preferably 1 to 20 parts by weight, with respect to 100 parts by weight of the reactive silicon group-containing polymer.

### <Adhesiveness imparting agent>

The adhesiveness imparting agent may be added to the curing composition. A silane coupling agent, a reaction product of the silane coupling agent may be added as the adhesiveness imparting agent.

Specific examples of the silane coupling agent include amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatepropyltrimethoxysilane, γ-isocyanatepropyltriethoxysilane, γ-isocyanatepropylmethyldimethoxysilane, α-isocyanatemethyltrimethoxysilane, and α-isocyanatemethyldimethoxymethylsilane; mercapto group-containing silanes such as γ-mercaptopropyltrimethoxysilane, γ-mercaptopropyltriethoxysilane, and γ-mercaptopropylmethyldimethoxysilane; epoxy group-containing silanes such as γ-glycidoxypropyltrimethoxysilane and β-(3,4-epoxycyclohexyl)ethyltrimethoxysilane.

Only one kind of the adhesiveness imparting agent may be used, or two or more kinds thereof may be used in mixture. Furthermore, reaction products of various silane coupling agents may also be used as the adhesiveness imparting agent.

An amount of use of the silane coupling agent is preferably 0.1 to 20 parts by weight, and particularly preferably 0.5 to 10 parts by weight, with respect to 100 parts by weight of the reactive silicon group-containing polymer.

### <Plasticizer>

The plasticizer may be added to the curing composition. Specific examples of the plasticizer include a phthalic acid ester compound such as dibutyl phthalate, diisononyl phthalate (DINP), diheptyl phthalate, di(2-ethylhexyl)phthalate, diisodecyl phthalate (DIDP), and butylbenzyl phthalate; a terephthalic acid ester compound such as bis(2-ethylhexyl)-1,4-benzene dicarboxylate; a non-phthalic acid ester compound such as diisononyl 1,2-cyclohexanedicarboxylate; an aliphatic polyhydric carboxylic acid ester compound such as dioctyl adipate, dioctyl sebacate, dibutyl sebacate, diisodecyl succinate, and acetyl tributyl citrate; an unsaturated fatty acid ester compound such as butyl oleate and methyl acetylricinolate; alkylsulfonic acid phenyl ester; a phosphoric acid ester compound; a trimellitic acid ester compound; chlorinated paraffin; a hydrocarbon-based oil such as alkyldiphenyl and partially hydrogenated terphenyl; a processing oil; an epoxy plasticizer such as an epoxidized soybean oil and benzyl epoxystearate, and the like.

A polymeric plasticizer may also be used. Specific examples of the polymeric plasticizer include a vinyl-based polymer; a polyester-based plasticizer; polyethers, for example, polyether polyol having a number average molecular weight of 500 or more such as polyethylene glycol, polypropylene glycol, and the like, derivatives of these polyether polyols in which a hydroxy group is converted into an ester group, an ether group, or the like; polystyrenes; polybutadiene, polybutene, polyisobutylene, butadiene-acrylonitrile, and polychloroprene.

An amount of use of the plasticizer is preferably 5 to 150 parts by weight, more preferably 10 to 120 parts by weight, and particularly preferably 20 to 100 parts by weight, with respect to 100 parts by weight of the reactive silicon group-containing polymer. The use of the plasticizer falling within the above-described range makes it easy to obtain a curable composition from which a cured product having excellent mechanical strength can be formed while providing the desired effect as the plasticizer. The plasticizer may be used singly, or two or more kinds thereof may be used in combination.

### <Anti-sagging agent>

For the purpose of preventing sagging and improving workability, the anti-sagging agent may be added to the curing composition, as necessary. The anti-sagging agent is not particularly limited. Examples of the anti-sagging agent include polyamide waxes; hydrogenated castor oil derivatives; metallic soaps such as calcium stearate, aluminum stearate, and barium stearate. The anti-sagging agent may be used singly, or two or more kinds thereof may be used in combination.

An amount of use of the anti-sagging agent is preferably 0.1 to 20 parts by weight, with respect to 100 parts by weight of the reactive silicon group-containing polymer.

### <Antioxidant>

The antioxidant (age resister) may be used for the curing composition. The antioxidant can be used to increase weather resistance of the cured product. As the antioxidant, a hindered phenolic system, a monophenolic system, a bisphenolic system, and a polyphenolic system may be exemplified. Specific examples of the antioxidant are described in, for example, Japanese Unexamined Patent Application, Publication Nos. H04-283259 and H09-194731.

An amount of use of the antioxidant is preferably 0.1 to 10 parts by weight, and particularly preferably 0.2 to 5 parts by weight, with respect to 100 parts by weight of the reactive silicon group-containing polymer.

### <Photostabilizer>

The photostabilizer may be used for the curing composition. The photostabilizer can be used to prevent photooxidative degradation of the cured product. As the photostabilizer, a benzotriazole system, a hindered amine system, and a benzoate-based compound, etc. may be exemplified. The hindered amine system is a particularly preferred photostabilizer.

An amount of use of the photostabilizer is preferably 0.1 to 10 parts by weight, and particularly preferably 0.2 to 5 parts by weight, with respect to 100 parts by weight of the reactive silicon group-containing polymer.

### <Ultraviolet absorber>

The ultraviolet absorber may be used for the curing composition. The ultraviolet absorber can be used to increase weather resistance on a surface of the cured product. As the ultraviolet absorber, a benzophenone system, a benzotriazole system, a salicylate system, a substituted tolyl system, and a metal chelate-based compound may be exemplified. The benzotriazole system is a particularly preferred ultraviolet absorber. Suitable specific examples of the benzotriazole system ultraviolet absorber include those sold under the trade names TINUVIN P, TINUVIN 213, TINUVIN 234, TINUVIN 326, TINUVIN 327, TINUVIN 328, TINUVIN 329, and TINUVIN 571 (all manufactured by BASF).

An amount of use of the ultraviolet absorber is preferably 0.1 to 10 parts by weight, and particularly preferably 0.2 to 5 parts by weight, with respect to 100 parts by weight of the reactive silicon group-containing polymer.

### <Physical property-adjusting agent>

The physical property-adjusting agent may be added to the curable composition for adjusting a tensile property of the cured product produced therefrom, as necessary. The physical property-adjusting agent is not particularly limited. Examples of the physical property-adjusting agent include alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane and phenyltrimethoxysilane; alkylisopropenoxysilane such as dimethyldiisopropenoxysilane, methyltriisopropenoxysilane, and γ-glycidoxypropylmethyldiisopropenoxysilane; trialkylsilylborates such as tris(trimethylsilyl)borate and tris(triethylsilyl)borate; silicone varnish; polysiloxanes, and the like. The physical property-adjusting agent can be used to increase hardness, or, conversely, decrease hardness to produce elongation at break of the cured product of the curable composition. The physical property-adjusting agent may be used singly, or two or more kinds thereof may be used in combination.

In particular, a compound from which a compound having a monovalent silanol group in a molecule is produced through hydrolysis has an action of decreasing a modulus of the cured product without deteriorating surface tackiness of the cured product. A compound from which trimethylsilanol is produced is particularly preferred. Examples of the compound from which a compound having a monovalent silanol group in a molecule is produced through hydrolysis include a silicon compound from which silane monool is produced through hydrolysis, which is a derivative of alcohol such as hexanol, octanol, phenol, trimethylolpropane, glycerin, pentaerythritol, and sorbitol.

An amount of use of the physical property-adjusting agent is preferably 0.1 to 10 parts by weight, and particularly preferably 0.5 to 5 parts by weight, with respect to 100 parts by weight of the reactive silicon group-containing polymer.

### <Epoxy group-containing compound>

The epoxy group-containing compound may be used in the curable composition. The epoxy group-containing compound can be used to increase resiliency of the cured product. As the epoxy group-containing compound, epoxidized unsaturated oils, epoxidized unsaturated fatty acid esters, alicyclic epoxy compounds, and compounds represented by epichlorohydrin derivatives, and mixtures thereof may be exemplified. Specific examples thereof include an epoxidized soybean oil, an epoxidized linseed oil, bis(2-ethylhexyl)-4,5-epoxycyclohexan-1,2-dicarboxylate (E-PS), epoxyoctyl stearate, and epoxybutyl stearate.

An amount of use of the epoxy compound is preferably 0.5 to 50 parts by weight, with respect to 100 parts by weight of the reactive silicon group-containing polymer.

### <Photocurable material>

The photocurable material may be used for the curing composition. The photocurable material can be used to form a film of the photocurable material on a surface of the cured product to thereby improve tackiness and weather resistance of the cured product. Many materials such as organic monomers, oligomers, resins, or compositions containing them are known as this kind of material. As representative photocurable materials, an unsaturated acrylic system compound, which is a monomer, oligomer, or mixtures thereof having one or several acrylic-based or methacrylic-based unsaturated groups; poly(vinyl cinnamate); or an azide resin can be used.

An amount of use of the photocurable material is preferably 0.1 to 20 parts by weight, and more preferably 0.5 to 10 parts by weight, with respect to 100 parts by weight of the reactive silicon group-containing polymer. The use of the photocurable material falling within the above-described range makes it easy to obtain a curable composition from which a cured product having excellent weather resistance, being flexible, and being difficult to crack can be formed.

### <Oxygen-curable material>

The oxygen-curable material may be used for the curing composition. As the oxygen-curable material, an unsaturated compound which can react with oxygen in the air may be exemplified. The oxygen-curable material is reacted with oxygen in the air to thereby form a cured film in the vicinity of a surface of the cured product, resulting in actions of, for example, preventing the surface from being tacky and dirt or dust from adhering onto the surface of the cured product.

Specific examples of the oxygen-curable material include a drying oil as represented by a tung oil and a linseed oil, and various alkyd resins that are obtained by modifying the compound; those obtained by modifying a resin such as an acryl-based polymer, an epoxy-based resin, and a silicon resin with the drying oil; a liquid polymer such as 1,2-polybutadiene, 1,4-polybutadiene, and a C5 to C8 diene polymer obtained by polymerizing or copolymerizing a diene-based compound such as butadiene, chloroprene, isoprene, and 1,3-pentadiene, and the like. These may be used singly, or two or more kinds thereof may be used in combination.

An amount of use of the oxygen-curable material is preferably 0.1 to 20 parts by weight, and more preferably 0.5 to 10 parts by weight, with respect to 100 parts by weight of the reactive silicon group-containing polymer. The amount of use of the oxygen-curable material falling within the above-described range makes it easy to obtain a sufficient contamination-improving effect and difficult to impair, for example, a tensile property of the cured product. As described in Japanese Unexamined Patent Application, Publication No. H03-160053, the oxygen-curable material is preferably used in combination with the photocurable material.

### <<Preparation of curable composition>>

The above-described curable composition can be prepared as one-component type of which components are all combined in advance, sealed, and stored and which is cured with moisture in the air after construction. Furthermore, the curable composition can also be prepared as two-component type which includes a combined material, serving as a curing agent, and an organic polymer composition to be mixed with each other before use, the combined material being prepared separately from the organic polymer composition by combining components such as the curing catalyst, the filler, the plasticizer, and water. From the viewpoint of workability, the one-component type is preferred.

In the case of the one-component type curable composition, since components thereof are all combined in advance, it is preferable that a moisture-containing component be previously dehydrated and dried before use or dehydrated under reduced pressure during combining and kneading. Furthermore, in addition to the dehydration and drying method, addition of, as a dehydrating agent, a silicon compound which may be reactive with water such as n-propyltrimethoxysilane, vinyltrimethoxysilane, vinylmethyldimethoxysilane, γ-mercaptopropylmethyldimethoxysilane, γ-mercaptopropylmethyldiethoxysilane, and γ-glycidoxypropyltrimethoxysilane further improves storage stability.

An amount of use of the dehydrating agent, in particular, the silicon compound which may be reactive with water such as vinyltrimethoxysilane is preferably 0.1 to 20 parts by weight and more preferably 0.5 to 10 parts by weight, with respect to 100 parts by weight of the reactive silicon group-containing polymer.

### <<Application>>

The above-described curable composition can be used for a sticker; a sealing material for sealing work on buildings, ships, automobiles, roads, or the like; a molding material; an adhesive; paint; and a spraying material. Furthermore, the cured product of the above-described curable composition can be suitably used as, for example, a waterproofing material, a coating film waterproofing material, a vibration-proofing material, a damping material, an acoustic insulating material, a foamed material, and the like. Since the cured product obtained by curing the curable composition has excellent flexibility and adhesiveness, the curable composition is more preferably used as the sealing material or the adhesive, among the above-described applications.

### EXAMPLES

The present invention will now be specifically described with reference to Examples. The present invention is not limited to Examples in any way.

A number average molecular weight in Examples is a GPC molecular weight measured under the following conditions. Liquid feeding system: HLC-8120GPC manufactured by Tosoh Corporation.
Column: TSK-GEL H type manufactured by Tosoh Corporation.
Solvent: THF
Molecular weight: in terms of polystyrene
Measurement temperature: 40°C

An end group-based molecular weight in Examples is a molecular weight determined using a hydroxyl value determined by the measurement method according to JIS K 1557 and an iodine value determined by the measurement method according to JIS K 0070, in view of the structure of an organic polymer (the degree of branching defined by a polymerization initiator used).

An average introduction number of carbon-carbon unsaturated bonds per end of a polymer (Q) described in Examples was calculated according to the following expression: (Average introduction number) = [Iodine value of Polymer (Q) - Iodine value of Polymer precursor (P)] / [Hydroxyl value of Polymer precursor (P)].

An average introduction number of silyl groups per end of a polymer described in Examples was calculated by NMR measurement.

### (Synthesis Example 1)

Propylene oxide was polymerized using polyoxypropylene glycol having a number average molecular weight of about 2,000, serving as an initiator, and a zinc hexacyanocobaltate-glyme complex catalyst to thereby obtain polyoxypropylene (P-1) having hydroxyl groups at both ends thereof and having a number average molecular weight of 27,900 (end group-based molecular weight: 17,700) and a molecular weight distribution Mw / Mn of 1.21. To the hydroxyl groups in the resultant hydroxyl group-terminated polyoxypropylene (P-1), was added 1.05 mol equivalents of sodium methoxide as a 28% methanol solution. The methanol was distilled off by vacuum devolatilization, and then 1.16 mol equivalents of propargyl bromide was further added to the hydroxyl groups in the polymer (P-1) to thereby convert the terminal hydroxyl groups into propargyl groups. Unreacted propargyl bromide was removed by devolatilization under reduced pressure. The resultant crude propargyl group-terminated polyoxypropylene was mixed and stirred with n-hexane and water, and then the water was removed by centrifugation and the hexane was devolatilized under reduced pressure from the resultant hexane solution to thereby remove a metal salt in the polymer. Thus, a polyoxypropylene polymer (Q-1) having propargyl groups at end sites was obtained. To 500 g of the polymer (Q-1), were added 150 µL of a platinum-divinyldisiloxane complex (3 wt% isopropanol solution in terms of platinum) and 15.0 g of dimethoxymethylsilane, to thereby effect a hydrosilylation reaction. After reacting at 90°C for 2 hours, unreacted dimethoxymethylsilane was distilled off under reduced pressure to thereby obtain polyoxypropylene (A-1) having two dimethoxymethylsilyl groups at an end thereof and having a number average molecular weight of 28,500. The polymer (A-1) was found to have on average 2.0 dimethoxymethylsilyl groups per end and on average 4.0 dimethoxymethylsilyl groups per molecule.

### (Synthesis Example 2)

To 500 g of the polymer (Q-1) obtained in Synthesis Example 1, were added 150 µL of a platinum-divinyldisiloxane complex (3 wt% isopropanol solution in terms of platinum) and 7.5 g of dimethoxymethylsilane, to thereby effect a hydrosilylation reaction. After reacting at 90°C for 2 hours, unreacted methyldimethoxysilane was distilled off under reduced pressure to thereby obtain polyoxypropylene (E-1) having a methyldimethoxysilyl group at an end thereof and having a number average molecular weight of 28,500. The polymer (E-1) was found to have on average 1.0 methyldimethoxysilyl group per end and on average 2.0 methyldimethoxysilyl groups per molecule.

### (Synthesis Example 3)

To the hydroxyl groups in the hydroxyl group-terminated polyoxypropylene (P-1) obtained from Synthesis Example 1, was added 1.2 mol equivalents of sodium methoxide as a 28% methanol solution. The methanol was distilled off by vacuum devolatilization, and then 1.5 mol equivalents of allyl chloride was further added to hydroxyl groups in the polymer (P-1) to thereby convert the terminal hydroxyl groups into allyl groups. Hereafter, purification manipulation was performed in the same manner as in Synthesis Example 1. Thus, a polyoxypropylene polymer (Q-2) having allyl groups at end sites was obtained. To 500 g of the polymer (Q-2), were added 150 µL of a platinum-divinyldisiloxane complex (3 wt% isopropanol solution in terms of platinum) and 4.8 g of dimethoxymethylsilane, to thereby effect a hydrosilylation reaction. After reacting at 90°C for 2 hours, unreacted dimethoxymethylsilane was distilled off under reduced pressure to thereby obtain polyoxypropylene (E-2) having one dimethoxymethylsilyl group at an end thereof and having a number average molecular weight of 28,500. The polymer (E-2) was found to have on average 0.8 dimethoxymethylsilyl group per end and on average 1.6 dimethoxymethylsilyl groups per molecule.

### (Synthesis Example 4)

To the hydroxyl groups in the hydroxyl group-terminated polyoxypropylene (P-1) obtained in Synthesis Example 1, was added 1.0 mol equivalent of sodium methoxide as a 28% methanol solution. The methanol was distilled off by vacuum devolatilization, and then 1.0 mol equivalent of allyl glycidyl ether was added to the hydroxyl groups in the polymer (P-1) and allowed to react at 130°C for 2 hours. Thereafter, 0.28 mol equivalents of a sodium methoxide solution in methanol was added thereto, methanol was removed, and 1.79 mol equivalents of allyl chloride was further added thereto to thereby convert the terminal hydroxyl groups into allyl groups. Hereafter, purification manipulation was performed in the same manner as in Synthesis Example 1. Thus, polyoxypropylene (Q-3) having two or more carbon-carbon unsaturated bonds at an end structure thereof was obtained. The polymer (Q-3) was found to have on average 2.0 carbon-carbon unsaturated bonds introduced thereinto per end site. To 500 g of the resultant polyoxypropylene (Q-3) having on average 2.0 carbon-carbon unsaturated bonds per end site, were added 150 µL of a platinum-divinyldisiloxane complex (3 wt% isopropanol solution in terms of platinum) and 9.6 g of dimethoxymethylsilane, to thereby effect a hydrosilylation reaction. After reacting at 90°C for 2 hours, unreacted dimethoxymethylsilane was distilled off under reduced pressure to thereby obtain polyoxypropylene (E-3) having two or more dimethoxymethylsilyl groups at an end structure thereof and having a number average molecular weight of about 28,500. The polymer (E-3) was found to have on average 1.7 dimethoxymethylsilyl groups per end and on average 3.4 dimethoxymethylsilyl groups per molecule.

### (Example 1, Comparative Example 1 to 3)

A total of 100 parts by weight of the polymer of a kind described in Table 1 was mixed with 55 parts by weight of DINP (manufactured by J-PLUS Co., Ltd.: diisononyl phthalate), 120 parts by weight of HAKUENKA CCR (manufactured by SHIRAISHI CALCIUM KAISHA, LTD.: precipitated calcium carbonate), 20 parts by weight of TIPAQUE R820 (manufactured by ISHIHARA SANGYO KAISHA, LTD.: titanium oxide), 2 parts by weight of DISPARLON 6500 (manufactured by Kusumoto Chemicals, Ltd.: fatty acid amide wax), 1 part by weight of TINUVIN 327 (manufactured by BASF: 2-(3,5-di-tert-butyl-2-hydroxyphenyl)-5-chlorobenzotriazole), and 1 part by weight of TINUVIN 770 (manufactured by BASF: bis(2,2,6,6-tetramethyl-2-piperidyl) sebacate), uniformly dispersed with three rolls, and dehydrated under reduced pressure at 120°C for 2 hours. Thereafter, the resultant was cooled to 50°C, and then added and mixed with 2 parts by weight of A-171 (manufactured by Momentive: vinyltrimethoxysilane), 3 parts by weight of A-1120 (manufactured by Momentive: N-(β-aminoethyl)-γ-aminopropyltrimethoxysilane), and 1 part by weight of U-220H (manufactured by Nitto Kasei Co., Ltd.: dibutyltin bisacetylacetonate), and then sealed in a damp-proof cartridge under a condition substantially free from moisture.

### (Dumbbell tensile physical property)

The resultant composition was filled into a mold and cured at 23°C and 50% RH for 3 days and further at 50°C for 4 days to thereby produce a sheet-shaped cured product having a thickness of about 3 mm. The sheet-shaped cured product was punched out into the Dumbbell type No.3, which was subjected to a tensile strength test at 23°C and 50% RH to thereby measure a modulus at 100% elongation (M100) and strength (TB) and elongation (EB) at break. The measurement was performed at a tension rate of 200 mm / min with AUTOGRAPH (AGS-J, manufactured by SHIMADZU CORPORATION). The results are presented in Table 1.

**[Table 1]**

| Composition (Parts by weight) | | Ex. 1 | Comp. Ex. 1 | Comp. Ex. 2 | Comp. Ex. 3 | |
|---|---|---|---|---|---|---|
| Polymer | A-1 | 100 | | | | |
| | E-1 | | 100 | | | |
| | E-2 | | | 100 | | |
| | E-3 | | | | 100 | |
| Composition | DINP | 55 | 55 | 55 | 55 | |
| Calcium carbonate | CCR | 120 | 120 | 120 | 120 | |
| Titanium oxide | TIPAQUE R820 | 20 | 20 | 20 | 20 | |
| Anti-sagging agent | DISPARLON 6500 | 2 | 2 | 2 | 2 | |
| Photostabilizer | TINUVIN 770 | 1 | 1 | 1 | 1 | |
| Ultraviolet absorber | TINUVIN 327 | 1 | 1 | 1 | 1 | |
| Dehydrating agent | A - 171 | 2 | 2 | 2 | 2 | |
| Adhesiveness imparting agent | A - 1120 | 3 | 3 | 3 | 3 | |

| Condensation catalyst | U - 220H | | 1 | 1 | 1 | 1 |
|---|---|---|---|---|---|---|
| Dumbbell tensile physical property | M100 | MPa | 0.61 | 0.61 | 0.34 | 0.84 |
| | TB | MPa | 3.12 | 2.87 | 1.97 | 2.44 |
| | EB | % | 818 | 768 | 991 | 487 |

The cured product of the curable composition including the polymer (E-3) having a plurality of silyl groups at an end thereof has higher TB and strength, but has a higher modulus and lower elongation than that in the case where the polymer (E-2) having only one silyl group at an end thereof is used. Meanwhile, the cured product of the curable composition including the polymer (A-1) which has a structure having a plurality of silyl groups at an end thereof represented by General Formulas (1) and/or (2) above has higher TB and strength, but has a similar modulus and higher elongation than the cured product of the curable composition including the polymer (E-1) which is made of a polymer having a carbon-carbon triple bond in a similar manner but having only one silyl group at an end thereof.

## Claims

1. A reactive silicon group-containing polymer having a structure represented by General Formula (1) and/or (2): 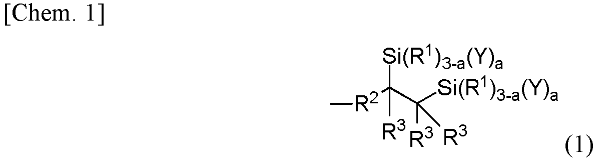 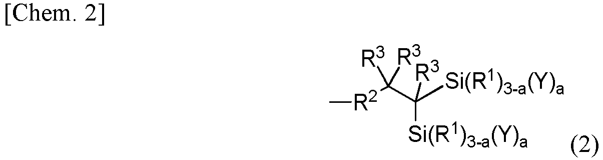 wherein
R² is a divalent linking group, each of two bonds that the R² has is bonded to a carbon atom, an oxygen atom, a nitrogen atom, or a sulfur atom in the linking group,
R³ each independently is hydrogen, an alkyl group having 1 to 20 carbon atoms, an aryl group having 6 to 20 carbon atoms, an aralkyl group having 7 to 20 carbon atoms, or a silyl group,
R¹ each independently is a hydrocarbon group having 1 to 20 carbon atoms, and the hydrocarbon group as R¹ may be substituted and may have a hetero-containing group,
Y is a hydroxyl group, hydrogen, halogen, an alkoxy group, an acyloxy group, a ketoximate group, an amino group, an amide group, an acid amide group, an aminooxy group, a mercapto group, or an alkenyloxy group, and
a is 1, 2, or 3.

2. The reactive silicon group-containing polymer according to claim 1, wherein R³ is hydrogen.

3. The reactive silicon group-containing polymer according to claim 1 or 2, wherein R² is -Q-CH₂-.

4. The reactive silicon group-containing polymer according to any one of claims 1 to 3, wherein a main chain backbone of the reactive silicon group-containing polymer is a polyoxyalkylene-based polymer.

5. A curable composition comprising the reactive silicon group-containing polymer according to any one of claims 1 to 4.

6. A curable composition comprising
(A) a reactive silicon group-containing polymer having a structure represented by General Formula (1) and/or (2): 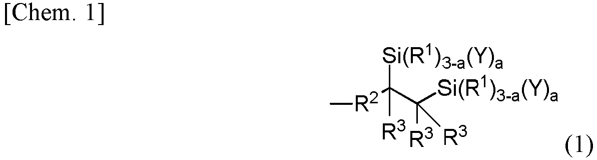 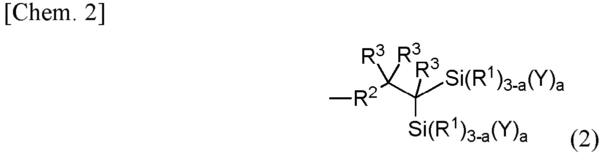 wherein
R² is a divalent linking group, each of two bonds that the R² has is bonded to a carbon atom, an oxygen atom, a nitrogen atom, or a sulfur atom in the linking group,
R³ each independently is hydrogen, an alkyl group having 1 to 20 carbon atoms, an aryl group having 6 to 20 carbon atoms, an aralkyl group having 7 to 20 carbon atoms, or a silyl group,
R¹ each independently is a hydrocarbon group having 1 to 20 carbon atoms, and the hydrocarbon group as R¹ may be substituted and may have a hetero-containing group,
Y is a hydroxyl group or a hydrolyzable group, and
a is 1, 2, or 3; and
(B) a curing catalyst.

7. The curable composition according to claim 6, wherein in General Formula (1) and/or (2) R³ is hydrogen.

8. The curable composition according to claim 6 or 7, wherein in General Formula (1) and/or (2) R² is -O-CH₂-.

9. The curable composition according to any one of claims 6 to 8, wherein a main chain backbone of the (A) reactive silicon group-containing polymer is a polyoxyalkylene-based polymer.

10. The curable composition according to any one of claims 6 to 9, wherein the curable composition comprises, as the (B) curing catalyst, at least one selected from the group consisting of an organotin compound, a metal carboxylate, an amine compound, a carboxylic acid, and an alkoxy metal.

11. The curable composition according to any one of claims 6 to 10, wherein in General Formula (1) and/or (2) Y is a hydroxyl group, hydrogen, halogen, an alkoxy group, an acyloxy group, a ketoximate group, an amino group, an amide group, an acid amide group, an aminooxy group, a mercapto group, or an alkenyloxy group.

12. A cured product of the curable composition according to any one of claims 5 to 11.

13. A method for producing a cured product, comprising:
applying, casting, or filling the curable composition according to any one of claims 5 to 11; and
curing the curable composition which has been applied, cast, or filled.

14. A sealing material or an adhesive, consisting of the curable composition according to any one of claims 5 to 11.

## Patentansprüche

1. Ein reaktives siliciumgruppenhaltiges Polymer mit einer Struktur, dargestellt durch allgemeine Formel (1) und/oder (2): 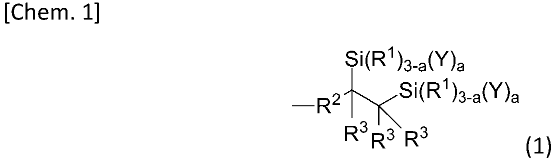 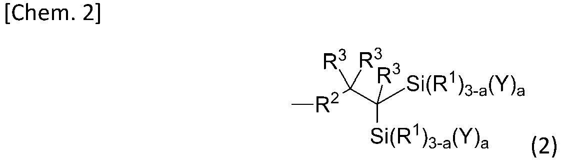 wobei
R² eine zweiwertige Verknüpfungsgruppeist, wobei jede der zwei Bindungen, die R² aufweist, an ein Kohlenstoffatom, ein Sauerstoffatom, ein Stickstoffatom oder ein Schwefelatom in der Verbindungsgruppe gebunden ist,
R³ jeweils unabhängig Wasserstoff, eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Silylgruppe ist,
R¹ jeweils unabhängig eine Kohlenwasserstoffgruppe mit 1 bis 20 Kohlenstoffatomen ist und die Kohlenwasserstoffgruppe als R¹ substituiert sein kann und eine heteroatomhaltige Gruppe aufweisen kann,
Y eine Hydroxylgruppe, Wasserstoff, Halogen, eine Alkoxygruppe, eine Acyloxygruppe, eine Ketoximatgruppe, eine Aminogruppe, eine Amidgruppe, eine Säureamidgruppe, eine Aminooxygruppe, eine Mercaptogruppe oder eine Alkenyloxygruppe ist und
a 1, 2 oder 3 ist.

2. Das reaktive siliciumgruppenhaltige Polymer nach Anspruch 1, wobei R³ Wasserstoff ist.

3. Das reaktive siliciumgruppenhaltige Polymer nach Anspruch 1 oder 2, wobei R² gleich - O-CH₂- ist.

4. Das reaktive siliciumgruppenhaltige Polymer nach einem der Ansprüche 1 bis 3, wobei ein Hauptkettengerüst des reaktiven siliciumgruppenhaltigen Polymers ein Polymer auf Polyoxyalkylenbasis ist.

5. Eine härtbare Zusammensetzung, umfassend das reaktive siliciumgruppenhaltige Polymer nach einem der Ansprüche 1 bis 4.

6. Eine härtbare Zusammensetzung, umfassend
(A) ein reaktives siliciumgruppenhaltiges Polymer mit einer Struktur, dargestellt durch allgemeine Formel (1) und/oder (2): 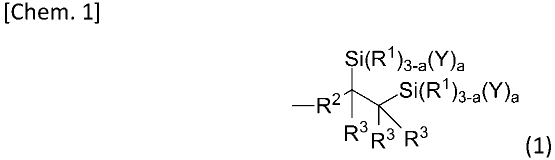 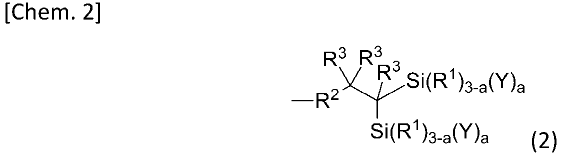 wobei
R² eine zweiwertige Verknüpfungsgruppe ist, wobei jede der zwei Bindungen, die R² aufweist, an ein Kohlenstoffatom, ein Sauerstoffatom, ein Stickstoffatom oder ein Schwefelatom in der Verbindungsgruppe gebunden ist,
R³ jeweils unabhängig Wasserstoff, eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Silylgruppe ist,
R¹ jeweils unabhängig eine Kohlenwasserstoffgruppe mit 1 bis 20 Kohlenstoffatomen ist und die Kohlenwasserstoffgruppe als R¹ substituiert sein kann und eine heteroatomhaltige Gruppe aufweisen kann,
Y eine Hydroxylgruppe oder eine hydrolysierbare Gruppe ist und
a 1, 2 oder 3 ist; und
(B) einen Härtungskatalysator.

7. Die härtbare Zusammensetzung nach Anspruch 6, wobei in allgemeiner Formel (1) und/oder (2) R³ Wasserstoff ist.

8. Die härtbare Zusammensetzung nach Anspruch 6 oder 7, wobei in allgemeiner Formel (1) und/oder (2) R² gleich -O-CH₂- ist.

9. Die härtbare Zusammensetzung nach einem der Ansprüche 6 bis 8, wobei ein Hauptkettengerüst des (A) reaktiven siliciumgruppenhaltigen Polymers ein Polymer auf Polyoxyalkylenbasis ist.

10. Die härtbare Zusammensetzung nach einem der Ansprüche 6 bis 9, wobei die härtbare Zusammensetzung als den (B) Härtungskatalysator mindestens eines, ausgewählt aus der Gruppe bestehend aus einer Organozinnverbindung, einem Metallcarboxylat, einer Aminverbindung, einer Carbonsäure und einem Alkoxymetall, umfasst.

11. Die härtbare Zusammensetzung nach einem der Ansprüche 6 bis 10, wobei in allgemeiner Formel (1) und/oder (2) Y eine Hydroxylgruppe, Wasserstoff, Halogen, eine Alkoxygruppe, eine Acyloxygruppe, eine Ketoximatgruppe, eine Aminogruppe, eine Amidgruppe, eine Säureamidgruppe, eine Aminooxygruppe, eine Mercaptogruppe oder eine Alkenyloxygruppe ist.

12. Ein gehärtetes Produkt aus der härtbaren Zusammensetzung nach einem der Ansprüche 5 bis 11.

13. Ein Verfahren zur Herstellung eines gehärteten Produkts, umfassend:
Auftragen, Gießen oder Einfüllen der härtbaren Zusammensetzung nach einem der Ansprüche 5 bis 11; und
Härten der härtbaren Zusammensetzung, die aufgetragen, gegossen oder eingefüllt wurde.

14. Ein Dichtungsmaterial oder ein Klebstoff, bestehend aus der härtbaren Zusammensetzung nach einem der Ansprüche 5 bis 11.

## Revendications

1. Polymère contenant un groupe siliconé réactif ayant une structure représentée par les Formules Générales (1) et/ou (2) : 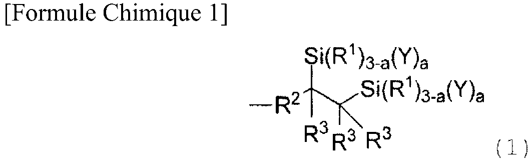 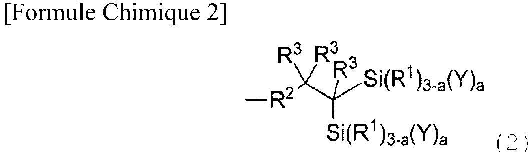 dans lequel
R² est un groupe de liaison divalent, chacune des deux liaisons que possède R² est liée à un atome de carbone, un atome d'oxygène, un atome d'azote ou un atome de soufre dans le groupe de liaison,
chaque R³ est indépendamment un hydrogène, un groupe alkyle ayant 1 à 20 atomes de carbone, un groupe aryle ayant 6 à 20 atomes de carbone, un groupe aralkyle ayant 7 à 20 atomes de carbone, ou un groupe silyle,
chaque R¹ est indépendamment un groupe hydrocarboné ayant 1 à 20 atomes de carbone, et le groupe hydrocarboné en tant que R¹ peut être substitué et peut porter un groupe contenant un hétéro-élément,
Y est un groupe hydroxyle, un hydrogène, un halogène, un groupe alcoxy, un groupe acyloxy, un groupe cétoximate, un groupe amino, un groupe amide, un groupe amide acide, un groupe amino-oxy, un groupe mercapto, ou un groupe alcényloxy, et
a vaut 1, 2 ou 3.

2. Polymère contenant un groupe siliconé réactif selon la revendication 1, dans lequel R³ est un hydrogène.

3. Polymère contenant un groupe siliconé réactif selon la revendication 1 ou 2, dans lequel R² est -O-CH₂-.

4. Polymère contenant un groupe siliconé réactif selon l'une quelconque des revendications 1 à 3, dans lequel le squelette de la chaîne principale du polymère contenant un groupe siliconé réactif est un polymère à base de polyoxyalkylène.

5. Composition durcissable comprenant le polymère contenant un groupe siliconé réactif selon l'une quelconque des revendications 1 à 4.

6. Composition durcissable comprenant
(A) un polymère contenant un groupe siliconé réactif ayant une structure représentée par les Formules Générales (1) et/ou (2) : 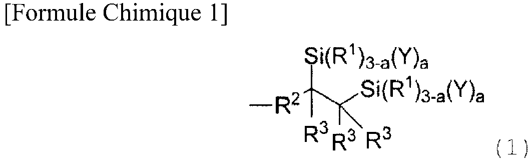 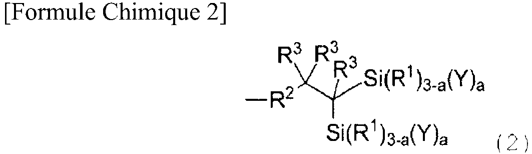 dans lequel
R² est un groupe de liaison divalent, chacune des deux liaisons que possède R² est liée à un atome de carbone, un atome d'oxygène, un atome d'azote ou un atome de soufre dans le groupe de liaison,
chaque R³ est indépendamment un hydrogène, un groupe alkyle ayant 1 à 20 atomes de carbone, un groupe aryle ayant 6 à 20 atomes de carbone, un groupe aralkyle ayant 7 à 20 atomes de carbone, ou un groupe silyle,
chaque R¹ est indépendamment un groupe hydrocarboné ayant 1 à 20 atomes de carbone, et le groupe hydrocarboné an tant que R¹ peut être substitué et peut porter un groupe contenant un hétéro-élément,
Y est un groupe hydroxyle ou un groupe hydrolysable, et
a vaut 1, 2 ou 3 ; et
(B) un catalyseur de durcissement.

7. Composition durcissable selon la revendication 6, dans laquelle, dans les Formules Générales (1) et/ou (2), R³ est un hydrogène.

8. Composition durcissable selon la revendication 6 ou 7, dans laquelle, dans les Formules Générales (1) et/ou (2), R² est -O-CH₂-.

9. Composition durcissable selon l'une quelconque des revendications 6 à 8, dans laquelle le squelette de la chaîne principale du polymère contenant un groupe siliconé réactif (A) est un polymère à base de polyoxyalkylène.

10. Composition durcissable selon l'une quelconque des revendications 6 à 9, dans laquelle la composition durcissable comprend, en tant que catalyseur de durcissement (B), au moins l'un choisi dans le groupe constitué par un composé organostannique, un carboxylate métallique, un composé amine, un acide carboxylique, et un alcoxy-métal.

11. Composition durcissable selon l'une quelconque des revendications 6 à 10, dans laquelle, dans les Formules Générales (1) et/ou (2), Y est un groupe hydroxyle, un hydrogène, un halogène, un groupe alcoxy, un groupe acyloxy, un groupe cétoximate, un groupe amino, un groupe amide, un groupe amide acide, un groupe amino-oxy, un groupe mercapto, ou un groupe alcényloxy.

12. Produit durci de la composition durcissable selon l'une quelconque des revendications 5 à 11.

13. Méthode pour produire un produit durci, comprenant :
l'application, la coulée ou l'introduction de la composition durcissable selon l'une quelconque des revendications 5 à 11 ; et
le durcissement de la composition durcissable qui a été appliquée, coulée ou introduite.

14. Matériau d'étanchéité ou adhésif, consistant en la composition durcissable selon l'une quelconque des revendications 5 à 11.
